# EUROPEAN PATENT APPLICATION

(11) **EP 4 822 463 A1**
(43) Date of publication of application: **14.10.2026**
(21) Application number: 24899691.0
(22) Date of filing: 27.11.2024
(51) Int. Cl.: G05B 19/19

(54) **CONTROL BOUNDARY DETERMINATION METHOD, APPARATUS, ELECTRONIC DEVICE AND COMPUTER READABLE STORAGE MEDIUM**

(30) Priority: 06.12.2023 CN 202311674662
(71) Applicant: Intelligent Grinding Technology (Shenzhen) Co., Ltd., Shenzhen, Guangdong 518000 (CN)
(72) Inventor: FAN, Liu, Shenzhen, Guangdong 518000 (CN)
(74) Representative: Cabinet Chaillot
(86) International application number: PCT/CN2024/134793
(87) International publication number: WO 2025/119051

(57) **Abstract**

The application provides a method for determining a control boundary, the method comprises: acquiring actual machining parameters of a tool during a machining process and a control parameter of the tool, wherein the control parameter is an allowable abnormal value of the tool; calling a boundary threshold model based on a machining scenario; and inputting the actual machining parameters and the control parameter into the boundary threshold model to obtain the control boundary. Accordingly, the control boundary can be generated by inputting actual machining parameters and control parameters into the boundary threshold model, which improves the objectivity, accuracy and generation efficiency of the control boundary.

## Description

The present application claims the priority of the Chinese patent application filed with the China National Intellectual Property Administration on December 06, 2023, with the application number 202311674662.2 and the title of the application being "Method, Apparatus, Electronic Device and Computer-Readable Storage Medium for Determining Control boundary", the entire content of which is incorporated into the present invention by reference.

### FIELD

The present application relates to the technical field of the monitoring for machine tool machining, and in particular, to a method and a device for determining control boundary, an electronic device and computer-readable storage medium.

### BACKGROUND

When a computer numerical control (CNC) machine tool machines a workpiece, it is necessary to monitor and control various parameters during the machining process, to ensure machining quality, safe production and normal operation of the equipment. A common monitoring method is to set a control boundary for the machining process to monitor whether the real-time physical quantity during the machining process exceeds the control boundary.

At present, the control boundary is mainly directly determined for the workpiece to be machined based on manual experience. However, the experience-based control boundary has the problems of subjectivity, instability and lag, which may affect the quality and efficiency of machining.

### SUMMARY

The primary technical problem to be solved by the present application is to provide a method and a device for determining control boundary, an electronic device and computer-readable storage medium, which can determine the control boundary according to a boundary threshold model and improve the objectivity and accuracy of the control boundary setting.

To solve the above technical problem, one aspect of the present application provides a method for determining a control boundary. The method comprises: acquiring actual machining parameters of a cutting tool during a machining process and a control parameter of the cutting tool, wherein the control parameter is an allowable abnormal value for the cutting tool; calling a boundary threshold model based on a machining scenario; and inputting the actual machining parameters and the control parameter into the boundary threshold model to obtain the control boundary.

To solve the above technical problem, another aspect of the present application provides a device for determining a control boundary. The device comprising: an acquisition module, configured to acquire actual machining parameters of a cutting tool during a machining process and a control parameter of the cutting tool, wherein the control parameter is an allowable abnormal value for the tool; a calling module, configured to call a boundary threshold model based on a machining scenario; and an input module, configured to input the actual machining parameters and the control parameter into the boundary threshold models to obtain the control boundary.

To solve the above technical problem, another aspect of the present application provides an electronic device, comprising a storage device and a processor. where the storage device stores program instructions, and the processor retrieves the program instructions from the memory to execute the method for determining a control boundary.

To solve the above technical problem, still another aspect of the present application provides a computer-readable storage medium storing program data, which is executed by a processor to implement the method for determining a control boundary.

Compared with the existing experience-based control boundary for monitoring the machining process of the machine tool, which exhibits certain subjectivity and inaccuracy, the present application provides a method for determining a control boundary. The method includes: acquiring actual machining parameters of a cutting tool during a machining process and a control parameter of the cutting tool, wherein the control parameter is an abnormal value of the tool; calling a boundary threshold model based on a machining scenario; and inputting the actual machining parameters and the control parameter into the boundary threshold model to obtain the control boundary. Thus, the control boundary can be generated by inputting the actual machining parameters and the control parameter into the boundary threshold model, which can improve the objectivity, accuracy and generation efficiency of the control boundary.

### BRIEF DESCRIPTION OF THE DRAWINGS

For a clearer understanding of the embodiments of the present application or the technical solutions in the prior art, the following briefly introduces the accompanying drawings required for the embodiments. Obviously, the drawings described below are merely some embodiments of the present application. For those of ordinary skill in the art, other drawings may be obtained based on these drawings without creative effort, in which:
FIG. 1 is a schematic flowchart of an embodiment of a method for determining the control boundary provided by the present application;
FIG. 2 is a schematic flowchart of an exemplary embodiment of step S130 in the method for determining the control boundary shown in FIG. 1;
FIG. 3 is a schematic flowchart of an exemplary embodiment of step S210 in the method for determining the control boundary shown in FIG. 2;
FIG. 4 is a schematic flowchart of an exemplary embodiment of step S320 in the method for determining the control boundary shown in FIG. 3;
FIG. 5 is a schematic flowchart of an exemplary embodiment of step S330 in the method for determining the control boundary shown in FIG. 3;
FIG. 6 is a schematic flowchart of an exemplary embodiment of step S310 in the method for determining the control boundary shown in FIG. 3;
FIG. 7 is a schematic flowchart of an exemplary embodiment of step S220 in the method for determining the control boundary shown in FIG. 2;
FIG. 8 is a schematic flowchart of another exemplary embodiment of step S220 in the method for determining the control boundary shown in FIG. 2;
FIG. 9 is a schematic flowchart of another exemplary embodiment of step S230 in the method for determining the control boundary shown in FIG. 2;
FIG. 10 is a schematic flowchart of another exemplary embodiment of step S120 in the method for determining the control boundary shown in FIG. 1;
FIG. 11 is a detailed schematic flowchart of an exemplary embodiment of the method for determining the control boundary provided by the present application;
FIG. 12 is a detailed structural schematic diagram of an exemplary embodiment of a device for determining the control boundary provided by the present application;
FIG. 13 is a structural schematic diagram of an embodiment of an electronic device provided by the present application;
FIG. 14 is a structural schematic diagram of an embodiment of a computer-readable storage medium provided by the present application.

### DESCRIPTION OF THE EMBODIMENTS

The technical solutions in the embodiments of the present application is clearly and completely described below with reference to the accompanying drawings in the embodiments of the present application. It is to be understood that the specific embodiments described herein are only used to explain the present application, but not to limit the present application. In addition, it should be noted that, for the convenience of description, only the parts related to the present application are shown in the accompanying drawings instead of all the structures. All other embodiments obtained by those of ordinary skill in the art based on the embodiments in the present application without creative work shall fall within the protection scope of the present application.

Firstly, it should be noted that a control boundary refers to a boundary for monitoring and controlling one or more key parameters and quality indicators during the machining process of the CNC machine tool. In the prior art, the control boundary for machining of the CNC machine tool is generally set by technical personnel with rich on-site experience. This approach suffers from certain subjectivity and inaccuracy, often resulting in different control boundaries set for the same process, which in turn leads to inconsistent quality of machined workpieces.

The present application provides a method for determining a control boundary, which is applicable to the machining process of the CNC machine tool. Specifically, the method comprises: acquiring actual machining parameters of a tool during a machining process and a control parameter of the tool, wherein the control parameter is an allowable abnormal value for the tool; calling a boundary threshold model based on a machining scenario; and inputting the actual machining parameters and the control parameter into the boundary threshold model to obtain the control boundary. Thus, the control boundary can be calculated by means of modeling, which ensures the objectivity and accuracy of the control boundary.

The method for determining a control boundary of the present application can be applied to the following industrial internet scenarios.

A system architecture of a possible industrial internet scenario includes a server, an edge device and a plurality of CNC machine tools. The server can communicate with the CNC machine tools directly, and the server can further communicate with the CNC machine tools indirectly through an edge computer. In addition, the server may be an industrial cloud platform, a physical server or a device of a physical server. The industrial cloud platform may be a public cloud platform or an enterprise private cloud platform. The physical server may be implemented as a single physical server or constructed by multiple servers to form a server cluster. The edge device is configured to collect information and acts as an intermediary for transferring communications between the server and the CNC machine tools. A single edge device may correspond to multiple CNC machine tools, or alternatively multiple edge devices are in one-to-one correspondence with their respective CNC machine tools.

The entity performing the method for determining a control boundary of the present application can directly execute the following embodiments through a CNC machine tool, or can control the CNC machine tool to execute the method through an edge computer, which is not limited herein specifically.

The method for determining a control boundary of the present application is described in conjunction with the above architecture, and it should be understood that the description is only exemplary, and the present application is not limited to the embodiments described herein.

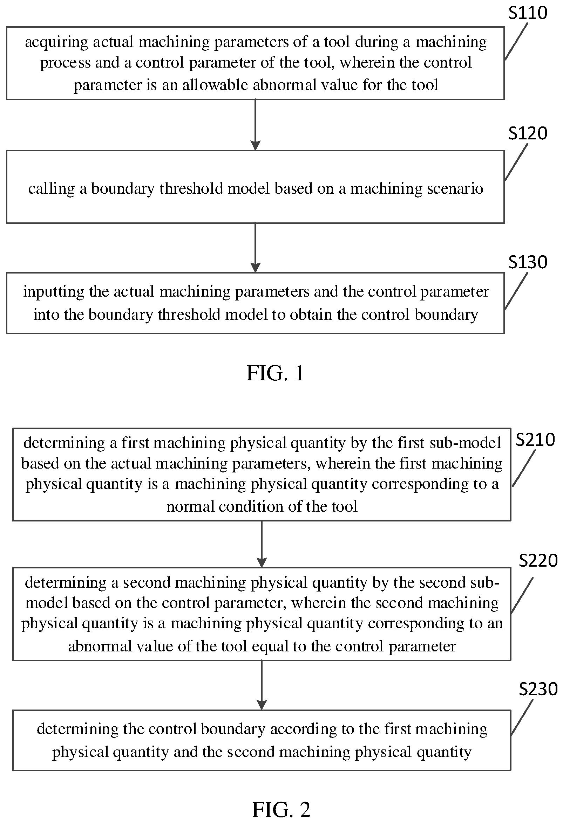

FIG. 1 is a flow chart of an exemplary embodiment of a method for determining a control boundary provided by the present application. Specifically, the method for determining a control boundary of this embodiment may include the following steps:

S110, acquiring actual machining parameters of a tool during a machining process and a control parameter of the tool, wherein the control parameter is an allowable abnormal value for the tool.

A tool refers to a device used for operations such as cutting, turning and milling in the machining process of a machine tool. Exemplarily, the tool may be a milling cutter, a turning tool, a drill bit, etc., and a suitable tool may be selected according to the hardness, toughness and process requirements of the material of the workpiece to be machined.

Actual machining parameters refer to a series of parameters for controlling and adjusting the tool during the machining process of the CNC machine tool. Exemplarily, the actual machining parameters can be determined according to multiple factors such as the material of the machined workpiece, the performance of the tool and the machining requirements. For example, the actual machining parameters may include a cutting width, a cutting depth of the workpiece, and a feed speed of the tool.

The control parameter may be a maximum allowable abnormal value for the tool. As a possible example, when the abnormality of the tool is caused by wear or fracture during machining, the wear value of the tool can be expressed quantitatively, for example, as 1mm, 2mm, 3mm, etc. During the machining process, a certain degree of wear of the tool may not affect the machine tool machining. Therefore, the maximum allowable abnormal value for the tool can be set to monitor and control the machining process of the machine tool, and the maximum allowable abnormal value indicates that when the wear degree of the tool reaches the maximum allowable abnormal value, the machine tool machining will be affected.

A device for determining a control boundary acquires the input actual machining parameters of the tool during the machining process and the control parameter of the tool.

S120, calling a boundary threshold model based on a machining scenario.

A machining scenario refers to a process selected according to machining requirements. Exemplarily, the machining scenarios may include milling, turning, grinding, and the like. In different machining scenarios, the methods for determining the control boundary may vary due to differences in tools used and process requirements of the workpiece. For this reason, a machining scenario library can be established in advance, and each machining scenario in the machining scenario library corresponds to a boundary threshold model.

The boundary threshold model refers to a model for generating a control boundary according to actual machining parameters and the control parameter. Exemplarily, when a current machining scenario is turning, the control boundary may be machining power of the machine tool corresponding to the control parameter; when the current machining scenario is milling, the control boundary may be a vibration frequency of the machine tool corresponding to the control parameter.

The device for determining a control boundary calls the boundary threshold model corresponding to the current machining scenario of the workpiece from the pre-established machining scenario library according to the current machining scenario.

S130, inputting the actual machining parameters and the control parameter into the boundary threshold model to obtain the control boundary.

The control boundary refers to a machining physical quantity of the machine tool corresponding to the control parameter. The control boundary may include an upper boundary and a lower boundary. To ensure the quality and safety of the machine tool machining, when the machining physical quantity exceeds the control boundary, the operator or the CNC machine tool can perform correction operations to restore the machining physical quantity within the control boundary. The machining physical quantity may be machining power. For example, when the cause of the abnormality is that the machining physical quantity of the machine tool exceeds the machining power corresponding to the control boundary during machining, the machine tool machining can be restored to normal by switching the tool.

Exemplarily, in order to better monitor the machine tool machining process, an alarm function can be provided. When a machining signal of the machine tool exceeds the control boundary, an alarm indicating a machining abnormality is triggered to provide a warning

The device for determining the control boundary inputs the actual machining parameters and the control parameter into the boundary threshold model, acquires the control boundary, and can control the machining process according to the control boundary. Exemplarily, the input of the actual machining parameters and the control parameter can be realized through machining codes, or by an operator using a touch screen or an external input device.

It can be seen that the method for determining the control boundary according to the embodiment of the present application acquires actual machining parameters of the tool during the machining process and the control parameter of the tool, wherein the control parameter is an allowable abnormal value for the tool; calls a boundary threshold model based on a machining scenario; and inputs the actual machining parameters and the control parameter into the boundary threshold model to obtain the control boundary. Thus, the control boundary can be generated by inputting the actual machining parameters and the control parameter into the boundary threshold model, which can improve the objectivity, accuracy and generation efficiency of the control boundary.

On the basis of the above embodiment, an embodiment of the present application describes in detail how to obtain the control boundary according to the boundary threshold model with reference to the flowchart of FIG. 2. FIG. 2 is a schematic flow chart of an exemplary embodiment of step S130 in the method for determining the control boundary shown in FIG. 1. Specifically, the step S130 of inputting the actual machining parameters and the control parameter into the boundary threshold model to obtain the control boundary includes the following steps:

Firstly, it should be noted that the boundary threshold model includes a first sub-model and a second sub-model. The first sub-model may be a physical model, and the second sub-model may be a big data model, such as a neural network model.

S210, determining a first machining physical quantity by the first sub-model based on the actual machining parameters, wherein the first machining physical quantity is a machining physical quantity corresponding to a normal condition of the tool.

The first sub-model is determined based on the machining scenario, and different first sub-models are called for different machining scenarios. Exemplarily, when the machining scenario is turning, the first sub-model corresponding to the turning is called, and when the machining scenario is milling, the first sub-model corresponding to the milling is called.

The first machining physical quantity is a result output by the first sub-model according to the actual machining parameters. Exemplarily, the first machining physical quantity may be machining power of the machine tool, vibration in the cutting area, sound in the cutting area, or the like. For example, when the machining scenario is turning the output of the first sub-model may be the machining power of the machine tool, and when the machining scenario is milling, the output of the first sub-model may be the vibration in the cutting area.

The first sub-model of the device for determining the control boundary performs theoretical calculation according to the input actual machining parameters to obtain the machining physical quantity corresponding to a normal condition of the machine tool machining, and determines the machining physical quantity corresponding to the normal condition of the machining as the first machining physical quantity.

S220, determining a second machining physical quantity by the second sub-model based on the control parameter, wherein the second machining physical quantity is a machining physical quantity corresponding to an abnormal value of the tool equal to the control parameter.

The second sub-mode is different from the first sub-model, and the second sub-model may not be determined by the machining scenario. Different machining scenarios may correspond to the same second sub-model. Exemplarily, after the machining scenario is determined, the first sub-model corresponding to the machining scenario is called, and the second sub-model is called, the first sub-model and the second sub-model together forming the boundary threshold model.

The second machining physical quantity is a result output by the second sub-model according to the control parameter. The second machining physical quantity represents a variation value of the machining physical quantity of the machine tool relative to the first machining physical quantity when the abnormal value of the tool equals to the control parameter.

The device for determining the control boundary inputs the control parameter into the second sub-model, and the second sub-model determines the second machining physical quantity according to the control parameter.

S230, determining the control boundary according to the first machining physical quantity and the second machining physical quantity.

After the device for determining the control boundary determines the first machining physical quantity and the second machining physical quantity based on the first sub-model and the second sub-model, respectively, the control boundary for the machine tool machining can be determined based on the first machining physical quantity and the second machining physical quantity.

It can be seen that the method for determining the control boundary according to the embodiment of the present application determines the first machining physical quantity by the first sub-model based on the actual machining parameters, wherein the first machining physical quantity is the machining physical quantity corresponding to the normal condition of the cutting tool; determines the second machining physical quantity by the second sub-model based on the control parameter, wherein the second machining physical quantity is a physical quantity deviating from the first machining physical quantity corresponding to an abnormal condition of the tool; and determines the control boundary according to the first machining physical quantity and the second machining physical quantity. Thus, the first machining physical quantity and the second machining physical quantity can be determined according to the first sub-model and the second sub-model, which has the advantages of simple modeling and high operation efficiency.

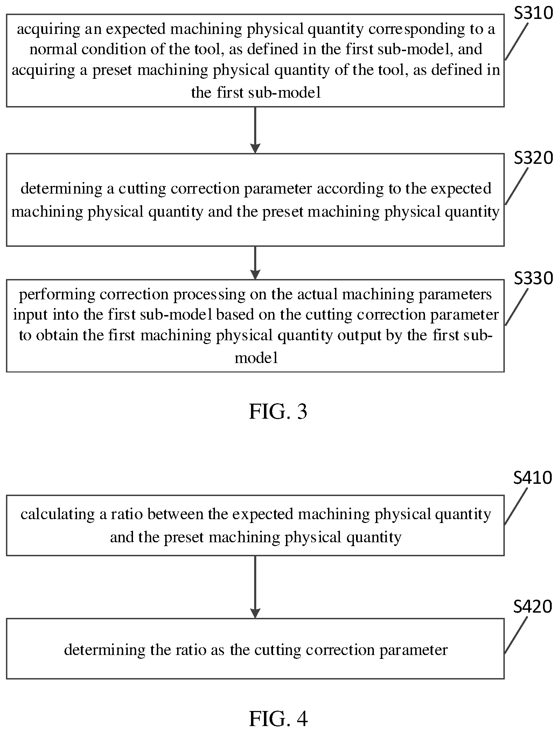

On the basis of the above embodiment, an embodiment of the present application describes in detail how to determine the first machining physical quantity according to the actual machining parameters with reference to the flowchart of FIG. 3. FIG. 3 is a schematic flowchart of an exemplary embodiment of step S210 in the method for determining a control boundary shown in FIG. 2. Specifically, step S210, the process of determining the first machining physical quantity by the first sub-model based on the actual machining parameters specifically includes the following steps:

S310, acquiring an expected machining physical quantity corresponding to a normal condition of the tool, as defined in the first sub-model, and acquiring a preset machining physical quantity of the tool, as defined in the first sub-model.

The expected machining physical quantity refers to a normal machining physical quantity in the actual machining process. Exemplarily, the expected machining physical quantity corresponding to the normal condition of the tool can be obtained through experiments, and is input into the first sub-model.

The preset machining physical quantity is a machining physical quantity obtained by theoretical calculation according to the actual machining parameters. Exemplarily, when machining is performed by using the same process, the preset machining physical quantity obtained by theoretical calculation should be the same.

The device for determining the control boundary inputs the expected machining physical quantity obtained through experiments and the actual machining parameters into the first sub-model, and the first sub-model obtains the preset machining physical quantity according to the actual machining parameters.

S320, determining a cutting correction parameter according to the expected machining physical quantity and the preset machining physical quantity.

The cutting correction parameter refers to a parameter for improving the accuracy of the output result of the first sub-model. The preset machining physical quantity calculated according to the actual machining parameters is a machining physical quantity obtained by theoretical calculation, which may deviate from the machining physical quantity generated in the actual machining process. Therefore, by providing a correction coefficient, the deviation of the theoretical calculation can be corrected.

After obtaining the expected machining physical quantity and the preset machining physical quantity, the first sub-model in the device for determining the control boundary determines the cutting correction parameter according to the expected machining physical quantity and the preset machining physical quantity.

S330, performing correction processing on the actual machining parameters input into the first sub-model based on the cutting correction parameter to obtain the first machining physical quantity output by the first sub-model.

The first sub-model in the device for determining the control boundary obtains the preset machining physical quantity according to the actual machining parameters, and determines the cutting correction parameter according to the expected machining physical quantity and the preset machining physical quantity. In practical application, the cutting correction parameter of the same process is the same. Therefore, when machining is performed by using the same process, the first machining physical quantity output by the first sub-model can be directly obtained using the actual machining parameters and the cutting correction parameter.

It can be seen that the method for determining the control boundary according to the embodiment of the present application acquires the expected machining physical quantity corresponding to the normal condition of the tool, as defined in the first sub-model, and acquires the preset machining physical quantity of the tool as defined in the first sub-model; determines the cutting correction parameter according to the expected machining physical quantity and the preset machining physical quantity; and performs correction processing on the actual machining parameters input into the first sub-model based on the cutting correction parameter, thereby obtaining the first machining physical quantity output by the first sub-model. Thus, the accuracy of the first machining physical quantity can be improved.

On the basis of the above embodiment, an embodiment of the present application describes in detail how to determine the cutting correction parameter with reference to the flowchart of FIG. 4. FIG. 4 is a schematic flowchart of an exemplary embodiment of step S320 in the method for determining the control boundary shown in FIG. 3. Specifically, step S320, the step of determining a cutting correction parameter according to the expected machining physical quantity and the preset machining physical quantity specifically includes the following steps:

S410, calculating a ratio between the expected machining physical quantity and the preset machining physical quantity.

After obtaining the expected machining physical quantity and the preset machining physical quantity, the first sub-model in the device for determining the control boundary calculates the ratio between the expected machining physical quantity and the preset machining physical quantity.

S420: determining the ratio as the cutting correction parameter.

The device for determining the control boundary determines the ratio between the expected machining physical quantity and the preset machining physical quantity as the cutting correction parameter.

It can be seen that the method for determining the control boundary according to the embodiment of the present application calculates the ratio between the expected machining physical quantity and the preset machining physical quantity; and determines the ratio as the cutting correction parameter. Thus, the deviation between the first machining physical quantity obtained by the first sub-model and the expected machining physical quantity can be made smaller, making the first machining physical quantity closer to actual machining.

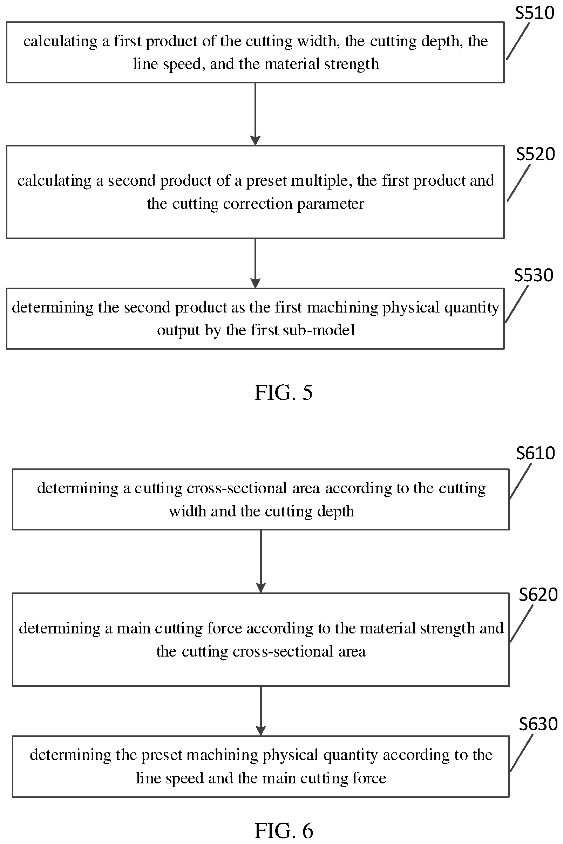

On the basis of the above embodiment, an embodiment of the present application describes in detail how to calculate the first machining physical quantity with reference to the flowchart of FIG. 5. FIG. 5 is a schematic flow chart of an exemplary embodiment of step S330 in the method for determining the control boundary shown in FIG. 3. Specifically, step S330, the step of performing correction processing on the actual machining parameters input into the first sub-model based on the cutting correction parameter to obtain the first machining physical quantity output by the first sub-model specifically includes the following steps:

Firstly, it should be noted that this embodiment takes turning as an example of the machining scenario. For other machining scenarios such as milling or grinding, the first machining physical quantity can be calculated under the guidance of the example of turning provided by the embodiment of the present application.

In turning, the actual machining parameters include a cutting width, a cutting depth, and a line speed during the machining process of the cutting tool and a material strength of the machined workpiece.

S510, calculating a first product of the cutting width, the cutting depth, the line speed, and the material strength.

The cutting width refers to a width of the material removed by the tool when machining the workpiece. The cutting depth refers to a depth to which the tool penetrates perpendicularly into a surface of the workpiece.

The line speed refers to a moving speed of a cutting edge of the tool relative to the surface of the workpiece during the machining process. Exemplarily, the line speed can be calculated as a product of a diameter of a rotating body and its rotational speed.

The material strength refers to the ability of the material of the workpiece to resist deformation and damage.

The device for determining the control boundary acquires the cutting width, the cutting depth, the line speed and the material strength from the actual machining parameters, and calculates the first product of the cutting width, the cutting depth, the line speed and the material strength.

S520, calculating a second product of a preset multiple, the first product and the cutting correction parameter.

Exemplarily, the preset multiple may be a cutting efficiency, which refers to the ability to remove materials at a certain speed during the cutting process.

S530, determining the second product as the first machining physical quantity output by the first sub-model.

The device for determining the control boundary calculates the second product according to the cutting width, the cutting depth, the line speed, the material strength, the preset multiple and the cutting correction parameter, and determines the second product as the first machining physical quantity output by the first sub-model.

It can be seen that the method for determining the control boundary according to the embodiment of the present application calculates the first product of the cutting width, the cutting depth, the line speed and the material strength; and calculates the second product of the preset multiple, the first product and the cutting correction parameter and determines the second product as the first machining physical quantity output by the first sub-model. Thus, the first machining physical quantity can be obtained in real time through calculation using the actual machining parameters.

On the basis of the above embodiment, an embodiment of the present application describes in detail how to calculate the preset machining physical quantity with reference to the flowchart of FIG. 6. FIG. 6 is a schematic flow chart of an exemplary embodiment of step S310 in the method for determining the control boundary shown in FIG. 3. Specifically, step S310, the process of acquiring the preset machining physical quantity of the cutting tool, as defined in the first sub-model, includes the following steps:

Firstly, it should be noted that this embodiment also takes turning as an example of the machining scenario. In turning, the actual machining parameters include the cutting width, the cutting depth, the line speed during the machining process of the cutting tool, and the material strength of the workpiece.

S610, determining a cutting cross-sectional area according to the cutting width and the cutting depth.

The cutting width refers to the width of the material removed by the tool when machining the workpiece. The cutting depth refers to the depth to which the tool penetrates perpendicularly into a surface of the workpiece.

The cutting cross-sectional area refers to the cross-sectional area of the workpiece material for each rotation of the tool during turning. Exemplarily, the cutting cross-sectional area can be obtained as a product of the cutting width and the cutting depth.

The device for determining the control boundary calculates the product of the cutting width and the cutting depth to determine the cutting cross-sectional area of the machine tool machining.

S620, determining a main cutting force according to the material strength and the cutting cross-sectional area.

The main cutting force refers to a cutting force in the direction of the main motion, that is, the force resisting the material being removed when the tool cuts into the material. Exemplarily, the main cutting force can be obtained by calculating a product of the material strength and the cutting cross-sectional area.

The device for determining control boundary calculates the product of the material strength and the cutting cross-sectional area to determine the main cutting force of the machine tool machining.

S630, determining the preset machining physical quantity according to the line speed and the main cutting force.

The device for determining the control boundary can obtain the preset machining physical quantity by calculating a product of the line speed, the main cutting force and the cutting efficiency.

It can be seen that the method for determining the control boundary according to the embodiment of the present application determines the cutting cross-sectional area according to the cutting width and the cutting depth; determines the main cutting force according to the material strength and the cutting cross-sectional area; and determines the preset machining physical quantity according to the line speed and the main cutting force. Thus, the preset machining physical quantity can be obtained in real time using the actual machining parameters of the current tool.

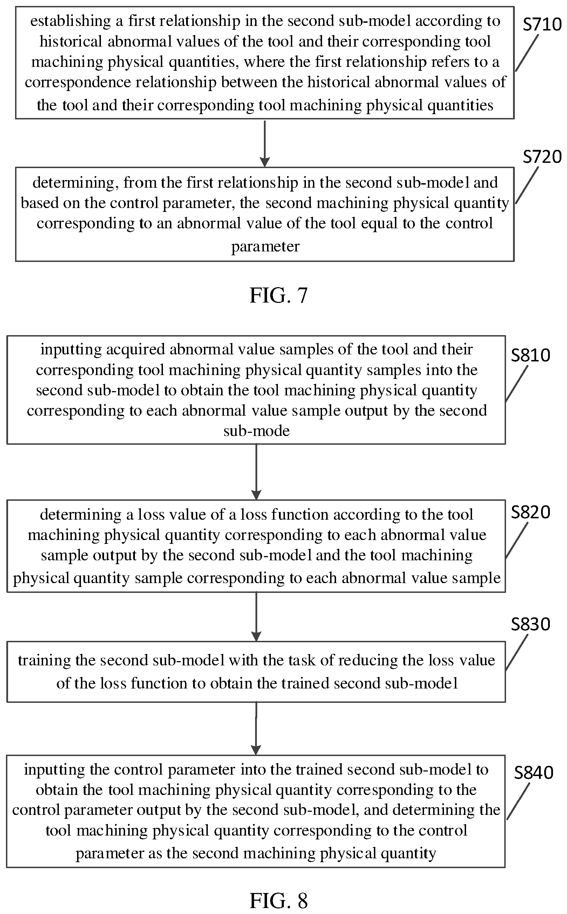

On the basis of the above embodiment, an embodiment of the present application described in detail how to obtain the second machining physical quantity with reference to the flowchart of FIG. 7. FIG. 7 is a schematic flow chart of an exemplary embodiment of step S220 in the method for determining the control boundary shown in FIG. 2. Specifically, step S220, the process of determining the second machining physical quantity by the second sub-model based on the control parameter specifically includes the following steps:

S710, establishing a first relationship in the second sub-model according to historical abnormal values of the tool and their corresponding tool machining physical quantities, where the first relationship refers to a correspondence relationship between the historical abnormal values of the tool and their corresponding tool machining physical quantities.

The historical abnormal values refer to abnormal values of the tool obtained through experiments. Exemplarily, the historical abnormal values of the tool may be a wear degree of the tool, for example, the historical abnormal values may be 1mm, 2mm, and 3mm of tool wear, etc.

The tool machining physical quantity refers to a tool machining physical quantity corresponding to the abnormal value of the tool.

The first relationship refers to the relationship between the historical anomaly values of the tool and their corresponding tool machining physical quantities. As an example, the first machining physical quantity of the tool machining determined by the first sub-model is 1kw. When the abnormal value of the cutting tool is 1mm, the corresponding tool machining physical quantity is 1.2kw; when the abnormal value of the cutting tool is 2mm, the corresponding cutting tool machining physical quantity is 1.4kw; when the abnormal value of the cutting tool is 3mm, the corresponding tool machining physical quantity is 1.6kw. It can be found, from the relationship between the historical abnormal values and the tool machining physical quantities, that the tool machining physical quantity increases by 0.2kw for each 1mm increase in the wear value. Thus, a second relationship between the historical abnormal values of the tool and variation values of the tool machining physical quantities corresponding to the historical abnormal value relative to the first machining physical quantity is obtained as y=0.2x, where y represents the variation values of the tool machining physical quantities corresponding to the historical abnormal values relative to the first machining physical quantity, and x represents the historical abnormal values.

The second sub-model in the device for determining the control boundary constructs the first relationship according to the historical abnormal values of the tool and their corresponding tool machining physical quantities and obtains, from the first relationship, the variation pattern of the tool machining physical quantities corresponding to the historical abnormal values, thereby obtaining the relationship between the historical abnormal values of the tool and the variation values of the machining physical quantities corresponding to the historical abnormal value relative to the first machining physical quantity.

S720, determining, from the first relationship in the second sub-model and based on the control parameter, the second machining physical quantity corresponding to an abnormal value of the tool equal to the control parameter.

The control parameter may be the maximum abnormal value for the tool. The second sub-model in the device for determining control boundary acquires the input control parameter and determines the second machining physical quantity according to the input control parameter. As a possible example, the relationship between the historical abnormal values of the tool and the variation values of the tool machining physical quantities corresponding to the historical abnormal value relative to the first machining physical quantity obtained from the first relationship is y=0.2x. If the input control parameter is 5mm, the second machining physical quantity can be obtained as 1kw.

The device for determining the control boundary acquires the control parameter, and determines, from the first relationship in the second sub-model and based on the control parameter, the second machining physical quantity corresponding to the abnormal value of the tool equal to the control parameter.

It can be seen that the method for determining the control boundary according to the embodiment of the present application establishes the first relationship in the second sub-model according to the historical anomaly values of the tool and their corresponding tool machining physical quantities, where the first relationship refers to the correspondence relationship between the historical abnormal value of the tool and their corresponding tool machining physical quantities; and determines, from the first relationship in the second sub-model and based on the control parameter, the second machining physical quantity corresponding to the abnormal value of the tool equal to the control parameter. Thus, the variation pattern of the tool machining physical quantities corresponding to the tool abnormal values can be obtained, so that the second machining physical quantity corresponding to each abnormal value can be obtained according to the variation pattern, which improves the computational efficiency of the second machining physical quantity and reduces the operation difficulty.

On the basis of the above embodiment, an embodiment of the present application describes in detail how to obtain the second machining physical quantity by using a neural network model with reference to the flowchart of FIG. 8. FIG. 8 is a schematic flow chart of another exemplary embodiment of step S220 in the method for determining the control boundary shown in FIG. 2. Specifically, step S220, the step of determining the second machining physical quantity by the second sub-model based on the control parameter specifically includes the following steps:

S810, inputting acquired abnormal value samples of the tool and their corresponding tool machining physical quantity samples into the second sub-model to obtain the tool machining physical quantity corresponding to each abnormal value sample output by the second sub-model.

The abnormal value samples refer to the abnormal values of the tool obtained through debugging or experiments. Exemplarily, taking the tool wear as an abnormality, the abnormal values of the tool may be wear degree values, such as 1mm, 2mm and 3mm, etc. The tool machining physical quantity sample corresponding to the abnormal value sample represents the actual variation value of the machining physical quantity corresponding to the abnormal value sample. The tool machining physical quantity sample corresponding to the abnormal value sample can be determined based on data collected by sensors.

The tool machining physical quantity refers to a variation value of a machining physical quantity obtained by monitoring a machining process performed at a corresponding abnormal value of the tool. Exemplarily, taking the tool wear as an abnormality, when the abnormal value of the tool is 1mm of wear, the corresponding tool machining physical quantity is 2kw; when the abnormal value of the tool is 2mm of wear, the corresponding tool machining physical quantity is 4kw; when the abnormal value of the tool is 3mm of wear, the corresponding tool machining physical quantity is 6kw, and so on. It can be understood that the relationship between the tool machining physical quantities and the abnormal value of the tool is not necessarily linear. The relationship can be obtained through training according to actual conditions, which is not limited in the present application.

In another possible example, the abnormal value samples of the tool can also be abnormal signals, that is, waveform diagrams. The abnormal machining signals of the tool in a specific machining scenario can be input into the second sub-model for training, so as to directly generate upper and lower control boundaries from the output result of the second sub-model.

The device for determining the control boundary inputs the acquired anomaly value samples of the tool and their corresponding tool machining physical quantity samples into the second sub-model to obtain the tool machining physical quantity output by the second sub-model.

S820: determining a loss value of a loss function according to the tool machining physical quantity corresponding to each abnormal value sample output by the second sub-model and the tool machining physical quantity sample corresponding to each abnormal value sample.

The loss function refers to a function for measuring the difference between the tool machining physical quantity output by the second sub-model and the tool machining physical quantity sample. Exemplarily, it can be calculated by a mean square error loss function, a cross entropy loss function, etc.

After obtaining the tool machining physical quantity output by the second sub-model, the device for determining the control boundary calculates the loss value between the tool machining physical quantity output by the second sub-model and the cutting tool machining physical quantity sample.

S830, training the second sub-model with the task of reducing the loss value of the loss function to obtain the trained second sub-model.

The smaller the loss value is, the closer the tool machining physical quantity output by the second sub-model is to the tool machining physical quantity sample, and the more accurate the output result of the second sub-model is. The loss value can be reduced by updating the model parameters, so as to complete the training of the second sub-model.

The device for determining the control boundary continuously updates the parameters of the second sub-model with the task of reducing the loss value of the loss function until the loss value drops to an acceptable level, so as to obtain a trained second sub-model.

S840, inputting the control parameter into the trained second sub-model to obtain the tool machining physical quantity corresponding to the control parameter output by the second sub-model, and determining the tool machining physical quantity corresponding to the control parameter as the second machining physical quantity.

The trained second sub-model is capable of determining a tool machining physical quantity corresponding to an input abnormal value of the tool. The device for determining the control boundary inputs the control parameter into the trained second sub-model, and the second sub-model outputs the corresponding tool machining physical quantity according to the control parameter, and determines the tool machining physical quantity as the second machining physical quantity.

It can be seen that the method for determining the control boundary according to the embodiment of the present application inputs acquired abnormal value samples of the tool and their corresponding tool machining physical quantity samples into the second sub-model to obtain the tool machining physical quantity output by the second sub-model; determines the loss function between the cutting tool machining physical quantity output by the second sub-model and the cutting tool machining physical quantity sample; trains the second sub-model with the task of reducing the loss value of the loss function to obtain the trained second sub-model; and inputs the control parameter into the trained second sub-model to obtain the cutting tool machining physical quantity corresponding to the control parameter output by the second sub-model, and determines the tool machining physical quantity corresponding to the control parameter as the second machining physical quantity. The above method can improve the accuracy and generation efficiency of the second machining physical quantity.

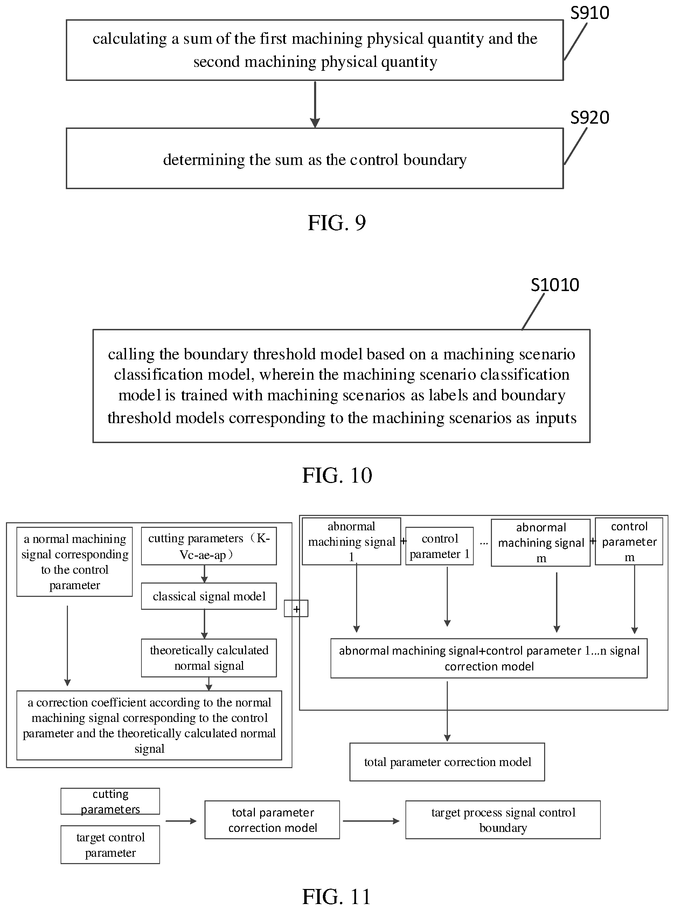

On the basis of the above embodiment, an embodiment of the present application describes in detail how to determine the control boundary according to the first machining physical quantity and the second machining physical quantity with reference to the flowchart of FIG. 9. FIG. 9 is a schematic flow chart of another exemplary embodiment of step S230 in the method for determining a control boundary shown in FIG. 2. Specifically, step S230, the step of determining the control boundary according to the first machining physical quantity and the second machining physical quantity specifically includes the following steps:

S910, calculating a sum of the first machining physical quantity and the second machining physical quantity.

The device for determining the control boundary acquires the first machining physical quantity output by the first sub-model and the second machining physical quantity output by the second sub-model, and calculates the sum of the first machining physical quantity and the second machining physical quantity.

S920: determining the sum as the control boundary.

Since the second machining physical quantity is the variation value corresponding to the abnormal value of the tool equal to the control parameter, the sum of the first machining physical quantity and the second machining physical quantity can represent the tool machining physical quantity corresponding to the abnormal value of the tool equal to the control parameter. Taking the sum of the physical quantities as the control boundary means that the machining physical quantity of the tool in actual machining is not allowed to exceed the tool machining physical quantity corresponding to the abnormal value of the tool equal to the control parameter.

The device for determining the control boundary takes the sum of the first machining physical quantity and the second machining physical quantity as the control boundary to monitor whether the tool machining physical quantity exceeds a limit corresponding to the allowable maximum abnormal value of the tool during the machining process.

It can be seen that the method for determining the control boundary according to the embodiment of the present application calculates the sum of the first machining physical quantity and the second machining physical quantity; and determines the sum as the control boundary. Thus, the control boundary can be directly determined by the sum of the first machining physical quantity and the second machining physical quantity, thereby simplifying the method for determining the control boundary.

On the basis of the above embodiment, an embodiment of the present application describes in detail how to determine the control boundary according to the first machining physical quantity and the second machining physical quantity with reference to FIG. 10. FIG. 10 is a schematic flow chart of another exemplary embodiment of step S120 in the method for determining the control boundary shown in FIG. 1. Specifically, step S120, the step of calling a boundary threshold model based on a machining scenario specifically includes the following steps:

S1010, calling the boundary threshold model based on a machining scenario classification model, wherein the machining scenario classification model is trained with machining scenarios as labels and boundary threshold models corresponding to the machining scenarios as inputs.

The machining scenario classification model is configured to call a corresponding boundary threshold model according to each of different machining scenarios.

The machining process selects different machining scenarios according to different machining requirements. Exemplarily, the machining scenarios may include milling, turning, and grinding, etc. Therefore, these machining scenarios and their corresponding boundary threshold models can be used as the inputs of the machining scenario classification model. The machining scenario classification model is trained with the machining scenarios as labels, thereby obtaining a trained machining scenario classification model.

The trained machining scenario classification model is capable of obtaining the boundary threshold model corresponding to the machining scenario.

The device for determining the control boundary inputs the machining scenarios and their corresponding boundary threshold models into the machining scenario classification model for training, thereby obtaining a trained machining scenario classification model, and calls the boundary threshold model based on the trained machining scenario classification model.

It can be seen that the method for determining the control boundary according to the embodiment of the present application calls the boundary threshold model based on the machining scenario classification model, wherein the machining scenario classification model is trained with machining scenarios as labels and boundary threshold models corresponding to the machining scenarios as inputs. Thus, the boundary threshold model corresponding to the current machining scenario is obtained through the machining scenario classification model, which can improve the adaptability and flexibility of the boundary threshold model.

To elaborate on the method for determining the control boundary of the present application, further description is made with reference to the flowchart shown in FIG. 11, as follows:

Firstly, the modeling process includes: inputting cutting parameters and a normal machining signal corresponding to the control parameter (i.e. the expected machining physical quantity) into the first sub-model, and calculating a normal signal corresponding to the cutting parameters (i.e., the preset machining physical quantity) according to the classical signal model theory, where K in the cutting parameters represents the material strength, Vc represents the line speed, ae represents the cutting width, and ap represents the cutting depth; calculating a correction coefficient according to the normal machining signal corresponding to the control parameter and the theoretically calculated normal signal, i.e., calculating the cutting correction parameter according to the expected machining physical quantity and the preset machining physical quantity. The second sub-model is configured to fit the input abnormal machining signals and the corresponding control parameters to obtain the variation pattern of the abnormal machining signals, where the corresponding control parameters refer to the historical anomaly values, and the abnormal machining signals are the tool machining physical quantities corresponding to the respective historical anomaly values. Finally, the first sub-model and the second sub-model are combined to obtain a total parameter correction model, i.e., the boundary threshold model.

Secondly, cutting parameters and a target control parameter are input into the total parameter correction model to obtain a target process signal control boundary, where the cutting parameters are the actual machining parameters, the target control parameter is the control parameter, and the target process signal control boundary is the control boundary.

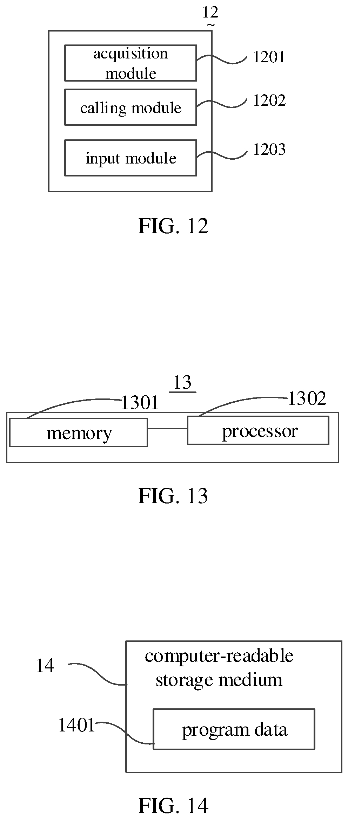

FIG. 12 is a schematic structural diagram of an exemplary embodiment of a device for determining a control boundary provided by the present application. The device 12 for determining a control boundary includes an acquisition module 1201, a calling module 1202, and an input module 1203. The acquisition module 1201 is configured to acquire actual machining parameters of a tool during a machining process and a control parameter of the tool, wherein the control parameter is an allowable abnormal value of the tool. The calling module 1202 is configured to call a boundary threshold model based on a machining scenario. The input module 1203 is configured to input the actual machining parameters and the control parameter into the boundary threshold model to obtain the control boundary.

The device 12 for determining the control boundary of the embodiment of the present application acquires the actual machining parameters of the tool during the machining process and the control parameter of the tool, wherein the control parameter is an anomaly value of the tool. The device 12 then calls the boundary threshold model based on the machining scenario, and inputs the actual machining parameters and the control parameter into the boundary threshold model to obtain the control boundary. Thus, the control boundary can be generated by inputting the actual processing parameters and the control parameter into the boundary threshold model, which can improve the objectivity, accuracy and generation efficiency of the control boundary.

For the functions of the various modules mentioned above, reference can made to the foregoing embodiment of the method for determining the control boundary, and the details are not repeated here.

To implement the method for determining the control boundary of the above embodiment, the present application proposes another electronic device. FIG. 13 is a schematic structural diagram of an electronic device according to an embodiment of the present application.

The electronic device 13 includes a memory 1301 and a processor 1302, where the memory 1301 and the processor 1302 are coupled to each other.

The memory 1301 is configured to store program data, and the processor 1302 is configured to execute the program data to implement the method for determining the control boundary of the above embodiment.

In this embodiment, the processor 1302 may also be referred to as a CPU (Central Processing Unit). The processor 1302 may be an integrated circuit chip with signal processing capability. The processor 1302 may also be a general-purpose processor, a digital signal processor (DSP), an application specific integrated circuit (ASIC), a field programmable gate array (FPGA) or other programmable logic devices, discrete gates, transistor logic devices, or discrete hardware components. The general-purpose processor may be a microprocessor, or the processor 1302 may also be any conventional processor, etc.

The present application further provides a computer-readable storage medium 14. As shown in FIG. 14, the computer-readable storage medium 14 is configured to store program data 1401, which, when executed by a processor, is configured to implement the method for determining the control boundary as described in the method embodiments of the present application.

The methods involved in the embodiments of the method for determining the control boundary of the present application, when implemented in the form of software functional units and sold or used as independent products, may be stored in a device, such as a computer-readable storage medium. Based on such an understanding, the technical solution of the present application, either in its entirety or in part, or the portion that contributes to the prior art, may be embodied in the form of a software product. The computer software product is stored in a storage medium and includes several instructions to enable a computer device (which may be a personal computer, a server, a network device, etc.) or a processor to execute all or part of the steps of the methods described in the various embodiments of the present invention. The aforementioned storage medium includes various media that can store program codes, such as a USB flash drive, a mobile hard disk, a read-only memory (ROM), a random access memory (RAM), a magnetic disk or an optical disc.

The above are only the exemplary embodiments of the present application, and are not intended to limit the patent scope of the present application. Any equivalent structural or process modifications made based on the contents of the specification and drawings of the present application, or any direct or indirect application in other related technical fields, shall likewise be included in the patent protection scope of the present application.

## Claims

1. A method for determining a control boundary, **characterized in that** the method comprises:
acquiring actual machining parameters of a tool during a machining process and a control parameter of the tool, wherein the control parameter is an allowable abnormal value of the tool;
calling a boundary threshold model based on a machining scenario; and
inputting the actual machining parameters and the control parameter into the boundary threshold model to obtain the control boundary.

2. The method for determining the control boundary according to claim 1, **characterized in that** the boundary threshold model comprises a first sub-model and a second sub-model;
wherein the step of inputting the actual machining parameters and the control parameter into the boundary threshold model to obtain the control boundary comprises:
determining a first machining physical quantity by the first sub-model based on the actual machining parameters, wherein the first machining physical quantity is a machining physical quantity corresponding to a normal condition of the tool;
determining a second machining physical quantity by the second sub-model based on the control parameter, wherein the second machining physical quantity is a machining physical quantity corresponding to an abnormal value of the tool equal to the control parameter; and
determining the control boundary according to the first machining physical quantity and the second machining physical quantity.

3. The method for determining the control boundary according to claim 2, **characterized in that** the step of determining the first machining physical quantity by the first sub-model based on the actual machining parameters comprises:
acquiring an expected machining physical quantity corresponding to a normal condition of the tool as defined in the first sub-model, and acquiring a preset machining physical quantity of the tool as defined in the first sub-model;
determining a cutting correction parameter according to the expected machining physical quantity and the preset machining physical quantity; and
performing correction processing on the actual machining parameters input into the first sub-model based on the cutting correction parameter to obtain the first machining physical quantity output by the first sub-model.

4. The method for determining the control boundary according to claim 3, **characterized in that** the step of determining the cutting correction parameter according to the expected machining physical quantity and the preset machining physical quantity comprises:
calculating a ratio between the expected machining physical quantity and the preset machining physical quantity; and
determining the ratio as the cutting correction parameter.

5. The method for determining the control boundary according to claim 3, **characterized in that** the actual machining parameters comprise a cutting width, a cutting depth, a line speed during the machining process and a material strength of a workpiece being machined;
wherein the step of performing correction processing on the actual machining parameters input into the first sub-model based on the cutting correction parameter to obtain the first machining physical quantity output by the first sub-model comprises:
calculating a first product of the cutting width, the cutting depth, the line speed, and the material strength;
calculating a second product of a preset multiple, the first product, and the cutting correction parameter; and
determining the second product as the first machining physical quantity output by the first sub-model.

6. The method for determining the control boundary according to claim 3, **characterized in that** the actual machining parameters include a cutting width, a cutting depth, a line speed during the machining process and a material strength of a workpiece being machined; wherein the step of acquiring the preset machining physical quantity of the tool as defined in the first sub-model comprises:
determining a cutting cross-sectional area according to the cutting width and the cutting depth;
determining a main cutting force according to the material strength and the cutting cross-sectional area; and
determining the preset machining physical quantity according to the line speed and the main cutting force.

7. The method for determining a control boundary according to claim 2, **characterized in that** the step of determining the second machining physical quantity by the second sub-model based on the monitoring parameter, comprises:
establishing a first relationship in the second sub-model according to historical abnormal values of the tool and their corresponding tool machining physical quantities, where the first relationship refers to a correspondence relationship between the historical abnormal values of the tool and their corresponding tool machining physical quantities; and
determining the second machining physical quantity, which corresponds to the abnormal value of the tool equal to the control parameter, from the first relationship of the second sub-model based on the control parameter.

8. The method for determining a control boundary according to claim 2, **characterized in that** the step of determining the second machining physical quantity by the second sub-model based on the monitoring parameter, comprises:
inputting acquired abnormal value samples of the tool and their corresponding tool machining physical quantity samples into the second sub-model to obtain a tool machining physical quantity corresponding to each abnormal value sample output by the second sub-model;
determining a loss value of a loss function according to the tool machining physical quantity corresponding to each abnormal value sample output by the second sub-model and the tool machining physical quantity sample corresponding to each abnormal value sample;
training the second sub-model with the task of reducing the loss value of the loss function to obtain the trained second sub-model; and
inputting the control parameter into the trained second sub-model to obtain the tool machining physical quantity corresponding to the control parameter output by the second sub-model, and determining the tool machining physical quantity corresponding to the control parameter as the second machining physical quantity.

9. The method for determining the control boundary according to claim 2, **characterized in that** the step of determining the control boundary according to the first machining physical quantity and the second machining physical quantity, comprises:
calculating a sum of the first machining physical quantity and the second machining physical quantity; and
determining the sum as the control boundary.

10. The method for determining the control boundary according to claim 1, **characterized in that**
the step of calling a boundary threshold model based on a machining scenario comprises:
calling the boundary threshold model based on a machining scenario classification model, wherein the machining scenario classification model is obtained by training using machining scenarios as labels and their corresponding boundary threshold models as inputs.

11. A device for determining a control boundary, **characterized in that** the device comprises:
an acquisition module, configured to acquire actual machining parameters of a tool during a machining process and a control parameter of the tool, wherein the control parameter is an abnormal value for the tool;
a calling module, configured to call a boundary threshold model based on a machining scenario;
and an input module, configured to input the actual machining parameters and the control parameter into the boundary threshold model to obtain the control boundary.

12. An electronic device, **characterized by** comprising a memory and a processor, wherein the memory stores program instructions, and the processor is configured to retrieve the program instructions from the memory to execute the method according to any one of claims 1 to 10.

13. A computer-readable storage medium, **characterized by** the computer-readable storage medium storing program data, the program data being executable by a processor to implement the method according to any one of claims 1 to 10.
